# EUROPEAN PATENT APPLICATION

(11) **EP 2 770 707 A1**
(43) Date of publication of application: **27.08.2014**
(21) Application number: 13156442.9
(22) Date of filing: 22.02.2013
(51) Int. Cl.: H04M 1/725, G06Q 10/10

(54) **Method, apparatus and computer readable medium for providing a graphical representation of file attachments**

(71) Applicant: BlackBerry Limited, Waterloo, ON N2K 0A7 (CA)
(72) Inventor: Rydenhag, Daniel Tobias, Gothenburg 41304 (SE); Johannson, Per Åke Daniel, Malmö 21140 (SE); Jorisch, Per Erik Anders, Malmö 21140 (SE)
(74) Representative: Finnie, Peter John

(57) **Abstract**

A method is disclosed comprising generating, using computing apparatus, in relation to a repository of computer-readable messages accessible by the computing apparatus, a graphical representation for display using a display device of a list of file attachments attached to said messages. The listed file attachments are grouped by the messages to which they are respectively attached. Each list entry may correspond to the attachments of one message. Computer apparatus configured to implement the method, and computer-readable medium comprising instructions capable of causing computing apparatus to carry out the method are also disclosed

## Description

The present disclosure relates to electronic devices and, more particularly, the generation of a graphical user interface using computing apparatus for displaying on a display a graphical representation of the contents of a message repository.

Electronic devices that use computing apparatus to provide visual information to users via one or more displays are now in ubiquitous use, for example, as portable electronic devices in the form of handheld computers, smart phones, tablet computers, and laptop computers, and as non-portable electronic devices in the form of desktop computers or smart televisions. The display or displays that provide visual information from the electronic devices to the users may be separable from and coupleable to the electronic devices, or may be integrated therewith.

The electronic devices may generate user interfaces for display on the display coupled to the device for facilitating user interaction with, and operation of, the device via one or more user inputs. The user interfaces comprise visual elements that can be arranged in various manners on the screen. The visual elements provided in the user interface may together represent elements of, for example, an operating system of the electronic device and applications supported thereby. Indirect interaction, typically by pointer-based user inputs such as trackpads, trackballs, mice and cursors, and direct interaction, typically by touch-based user inputs such as touch screens and multitouch screens, can provide controls usable to allow interaction with the user interface. User interfaces having a desktop environment that include windows, icons, menus and a pointer as visual elements are known whereas user interfaces having a more touch-friendly paradigm may also be provided. Touch-based mobile devices may include both touch-friendly and desktop environment user interfaces between which a user may alternate, if, for example, an external keyboard, mouse and display are connected to convert the touch-screen mobile device into a more conventional computer implementation.

Electronic devices are commonly operated by users to send and receive electronic messages, such as emails, to other users via communications across a network. Typically, the messages sent and received by a user will be stored in a repository locally at the device, or remotely at a specific or non-specific networked server, or both locally and remotely in full or in part. A user typically accesses the messages stored in a repository using a messaging client which may be provided, for example, as a locally-installed application such as a fat or a thin email client, or as a web-based application served to the electronic device and displayed in a web browser. Typically a messaging client provides a graphical user interface having visual elements that enable a user to navigate through the messages sent and received on a message-wise or conversation-wise basis and view the contents of messages on the display. However, the large number of messages typically stored in a repository can make visualisation and navigation of the messages confusing, and efforts are ongoing to provide email clients that facilitate user interaction with stored messages.

Examples of the present proposed approach will now be described in detail with reference to the accompanying drawings, in which:
**Figure 1** is a block diagram illustrating an electronic device in accordance with example embodiments of the present disclosure;
**Figure 2** is a front view of a phone in accordance with example embodiments of the present disclosure;
**Figure 3** is a front view of a tablet computer is accordance with example embodiments of the present disclosure;
**Figure 4** is a block diagram illustrating electronic devices in accordance with the present disclosure communicating with server computers across a network; and
**Figures 5-7** show views of a graphical user interface of an email client in accordance with the present disclosure.

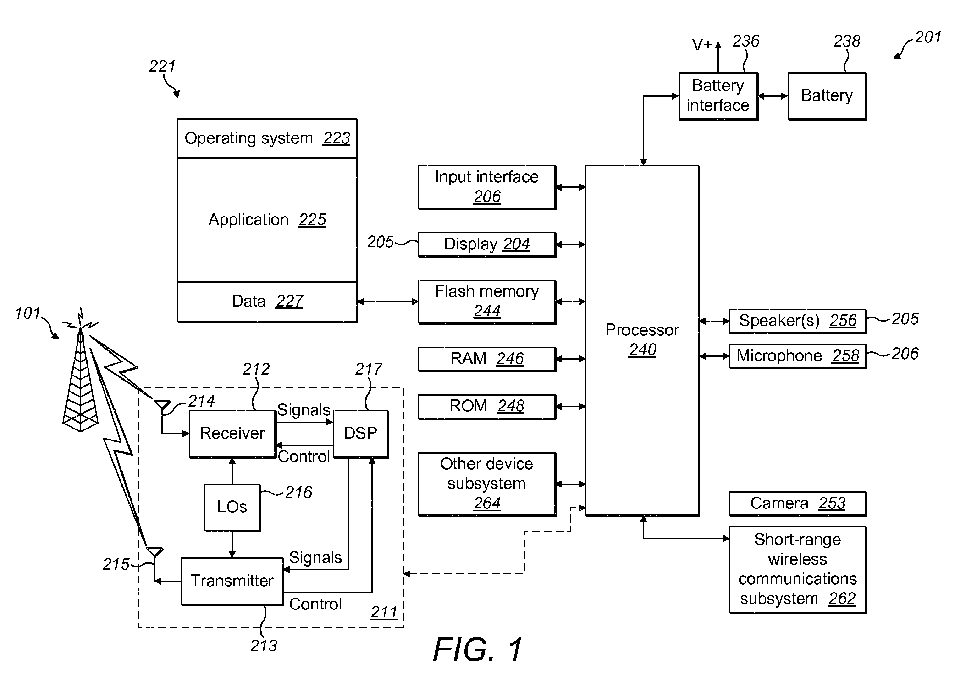

Reference will now be made to Figure 1 which illustrates an electronic device 201 in which example embodiments described in the present disclosure can be applied.

In the illustrated example embodiment, the electronic device 201 is a communication device and, more particularly, is a mobile communication device having data and voice communication capabilities, and the capability to communicate with other computer systems; for example, via the Internet.

Depending on the functionality provided by the electronic device 201, in various example embodiments the electronic device 201 may be a multiple-mode communication device configured for both data and voice communication, a mobile telephone, such as a phone, a wearable computer such as a watch, a tablet computer such as a slate computer, a personal digital assistant (PDA), or a computer system. The electronic device 201 may take other forms apart from those specifically listed above. The electronic device may also be referred to as a mobile communications device, a communication device, a mobile device and, in some cases, as a device.

The electronic device 201 includes a controller including one or more processors 240 (such as a microprocessor) which controls the overall operation of the electronic device 201. The processor 240 interacts with device subsystems such as a wireless communication subsystem 211 for exchanging radio frequency signals with a wireless network 101 to perform communication functions. The processor 240 is communicably coupled with additional device subsystems including one or more output interfaces 205 (such as a display 204 and/or a speaker 256 and/or a video output port (not shown) for coupling the device to an external display (not shown)), one or more input interfaces 206 (such as microphone 258, keyboard (not shown), control buttons (not shown), and/or a touch-sensitive overlay (not shown) associated with a touchscreen display 204), memory (such as random access memory (RAM) 246, read only memory (ROM) 248, etc.), a short-range wireless communication subsystem 262 and other device subsystems generally designated as 264.

In at least some example embodiments, the electronic device 201 may include a touchscreen display which acts as both an input interface 206 (i.e. touch-sensitive overlay) and an output interface 205 (i.e. display). The touchscreen display may be constructed using a touch-sensitive input surface which is connected to an electronic controller and which overlays the display 204. The touch-sensitive overlay and the electronic controller provide a touch-sensitive input interface 206 and the processor 240 interacts with the touch-sensitive overlay via the electronic controller.

As noted above, in some example embodiments, the electronic device 201 may include a communication subsystem 211 which allows the electronic device 201 to communicate over a wireless network 101 (and/or via a wired link (not shown)). The communication subsystem 211 includes a receiver 212, a transmitter 213, and associated components, such as one or more antenna elements 214 and 215, local oscillators (LOs) 216, and a processing module such as a digital signal processor (DSP) 217. The antenna elements 214 and 215 may be embedded or internal to the electronic device 201 and a single antenna may be shared by both receiver and transmitter. The particular design of the wireless communication subsystem 211 depends on the wireless network 101 in which electronic device 201 is intended to operate. The wireless network 101 may, for example, be a cellular (such as GSM, GPRS, CDMA and EDGE) and/or a non-cellular network (for example local WiFi networks).

In at least some example embodiments, the electronic device 201 may communicate with any one of a plurality of fixed transceiver base stations of the wireless network 101 within its geographic coverage area. The electronic device 201 may send and receive communication signals over the wireless network 101 after the required network registration or activation procedures have been completed. Signals received by the antenna 214 through the wireless network 101 are input to the receiver 212 and are demodulated and decoded by the Digital Signal Processor (DSP) 217. In a similar manner, signals to be transmitted are processed, including modulation and encoding, for example, by the DSP 217 and are input to the transmitter 213 for transmission to the wireless network 101 via the antenna 215. The DSP 217 not only processes communication signals, but may also provide for receiver and transmitter control. For example, the gains applied to communication signals in the receiver 212 and the transmitter 213 may be adaptively controlled through automatic gain control algorithms implemented in the DSP 217.

The electronic device 201 also includes a battery 238 as a power source, which is typically one or more rechargeable batteries that may be charged for example, through charging circuitry coupled to a battery interface 236 such as the data port 252. The battery 238 provides electrical power to at least some of the electrical circuitry in the electronic device 201, and the battery interface 236 provides a mechanical and electrical connection for the battery 238. The battery interface 236 is coupled to a regulator (not shown) which provides power V+ to the circuitry of the electronic device 201.

The electronic device 201 stores data 227 in an erasable persistent memory, which in one example embodiment is the flash memory 244. In various example embodiments, the data 227 includes service data including information required by the electronic device 201 to establish and maintain communication with the wireless network 101. The data 227 may also include user application data such as email messages, address book and contact information, calendar and schedule information, notepad documents, image files, and other commonly stored user information stored on the electronic device 201 by its user, and other data. The data 227 stored in the persistent memory of the electronic device 201 may be organized, at least partially, into one or more databases or data stores. The databases or data stores may contain data items of the same data type or associated with the same application. For example, email messages, contact records, and task items may be stored in individual databases within the device memory.

The electronic device 201 may, in some example embodiments, be operable to achieve data communication, such as to receive an email message stored in a repository of email messages of a user of the device that is stored locally to the device or remotely at another device, or to download a Web page. The received data will be processed by the communication subsystem 211 and input to the processor 240 for further processing. For example, a downloaded Web page may be further processed by a browser application or an email message may be processed by an email messaging application and output to the display 204. A user of the electronic device 201 may also compose data items, such as email messages; for example, using the input devices in conjunction with the display 204. These composed items may be transmitted through the communication subsystem 211 over the wireless network 101.

The processor 240 operates under stored program control and executes software modules 221 stored in memory such as persistent memory; for example, in the flash memory 244. As illustrated in Figure 1, the software modules 221 include operating system software 223 and other software applications 225 such as a web browser or an email client in accordance with the present disclosure. The web browser or email client may allow the user to access, view, navigate and interact with messages stored in a remote or local repository via a user interface.

The web browser or email client in accordance with the present disclosure may be provided as a computer software product. The computer software product may be provided in, on or supported by a computer readable medium which could be provided as all possible permanent and non-permanent forms of computer readable medium either transitory in nature, such as in a data transmission signal for example sent over the internet, or non-transitory in nature such as in the RAM 246 of the device 201 or other, non-volatile storage such as memory 230. On the other hand the computer readable medium may be a non-transitory computer readable medium comprising all computer-readable media, with the sole exception being a transitory, propagating signal.

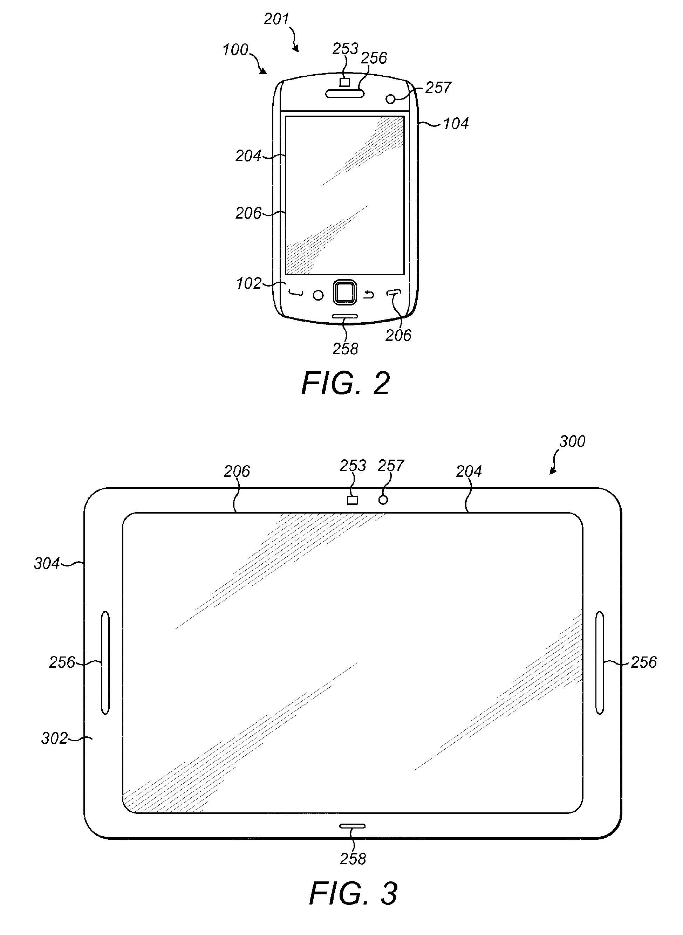

Referring now to Figure 2, the electronic device 201 could be a smart phone 100 which may have the ability to run third party applications which are stored on the phone and may include the components discussed above with reference to Figure 1 or a subset of those components.

Referring now to Figure 3, a front view of another example of an electronic device 201, a tablet computer 300, is illustrated. The tablet computer 300 may include many of the same features and components of the phone 100 of Figure 2. However, the tablet computer 300 of Figure 3 is generally larger than the phone 100. The tablet computer 300 may include the components discussed above with reference to Figure 1 or a subset of those components.

In embodiments, the smart phone 100 and tablet computer 300 are provided with an operating system having a touch-friendly user-interface which primarily uses touch-based gesture input from the touch screen to control the device. In addition, the smart phone 100 and tablet computer 300 may also be provided a more conventional desktop environment user-interface. A user may select the desktop environment user interface to control the device, for example, using primarily pointer-based gestures received from an external mouse and keyboard connected wirelessly via short-range wireless communication subsystem 262. In addition, the smart phone 100 and tablet computer 300 may be coupled to external displays, such as TFT monitors via video output ports. In this way, the mobile electronic devices may be converted for use as more conventional desktop electronic devices.

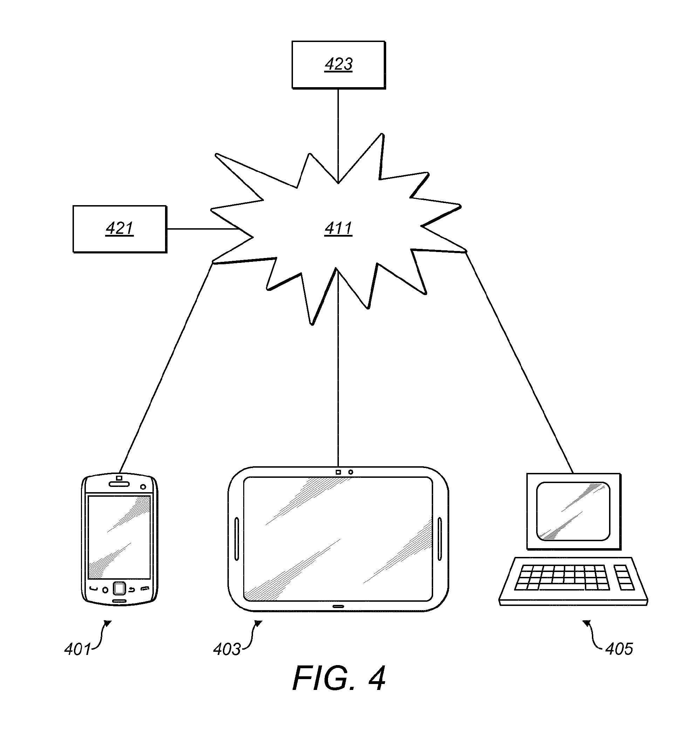

Referring now to Figure 4, users of electronic devices of the type shown in Figure 1, such as smart phone 401, tablet device 403, and desktop computer 405, may send electronic messages to and receive electronic messages from other users via the internet 411, to which the devices are connected. Typically, the messages may be sent from a named sender to a named receiver(s), who may be indicated by a unique identifier, such as an email address. Such electronic messages may include emails, instant messages, or other personal messages routed to a user via a social networking site, bulletin board, chat room, forum, or other network-enabled personal electronic messaging system. While the present disclosure sets out detailed description of embodiments implemented in an email client, this is not intended to be limiting. The teaching of this disclosure is applicable to all personal electronic messages to which one or more files may be attached, without limitation. However, the present disclosure finds particular utility in relation to email messages and email and/or webmail clients provided to allow users of electronic devices to view and interact with those email messages.

In Figure 4, email server 421 stores a repository of email messages of a user, including emails sent, received, in draft, deleted and archived. Files attached to the emails are also stored in the repository. Such files may include image files (such as .JPG, .GIF and .BMP), document files (such as .DOC and .PDF), video files (such as .MOV and .MPG), slideshow files (such as .PPT) and audio files (such as .MP3).

Users may use electronic devices to view and interact with the messages in different ways. For example, desktop computer 405 may have as an application 225 a fat email client which operates the desktop computer to access the email server 421 via the internet 411 to retrieve newly received emails and to store them in a local message repository stored in RAM 246, which also stores copies of sent messages, draft messages and archived messages. The fat email client application may provide a user interface and may access the locally stored message repository to generate a graphical representation, for display on the display 204, of the contents thereof. The user can thereby interact with the user interface to navigate through the local message repository and view the contents thereof.

Tablet computer 403 may have as an application 225 a thin email client which operates the tablet computer to access a web server 423 that provides a web application serving to the tablet computer 403, on request, email content retrieved from the message repository stored in the email server 421. No or minimal permanent or transient storage of the message contents may be made locally at the tablet computer. Rather, the thin email client provides a user interface that presents to the user a graphical representation, via display on the display 204, of the requested contents of the repository of the email server 421. The graphical representation may be generated at least in part at the tablet computer 403 by the thin email client and at least in part obtained from the web server 423, where it is generated. In other embodiments, the graphical representation may be obtained entirely from the web server 423, and merely reproduced locally at the tablet device 403 in the user interface of the thin email client on the display 204.

A user of smart phone 401 may access the content of message repository stored in email server 421 by pointing a web browser application 225 stored locally thereat to a Uniform Resource Locator identifying a web mail service provided by web server 423. In this arrangement, the smart phone 401 obtains all or at least part of the graphical representation of the requested contents of the message repository from the web mail application served by web server 423. In this case, no local store is made of the messages or their contents, as a result of the operation of the web browser 225 in viewing the messages view the web server.

The present disclosure is intended to cover all modes of accessing the contents of a local or remote message store, where the graphical representation of the contents of the message store is generated locally at a device or received from a remote location, where it is generated.

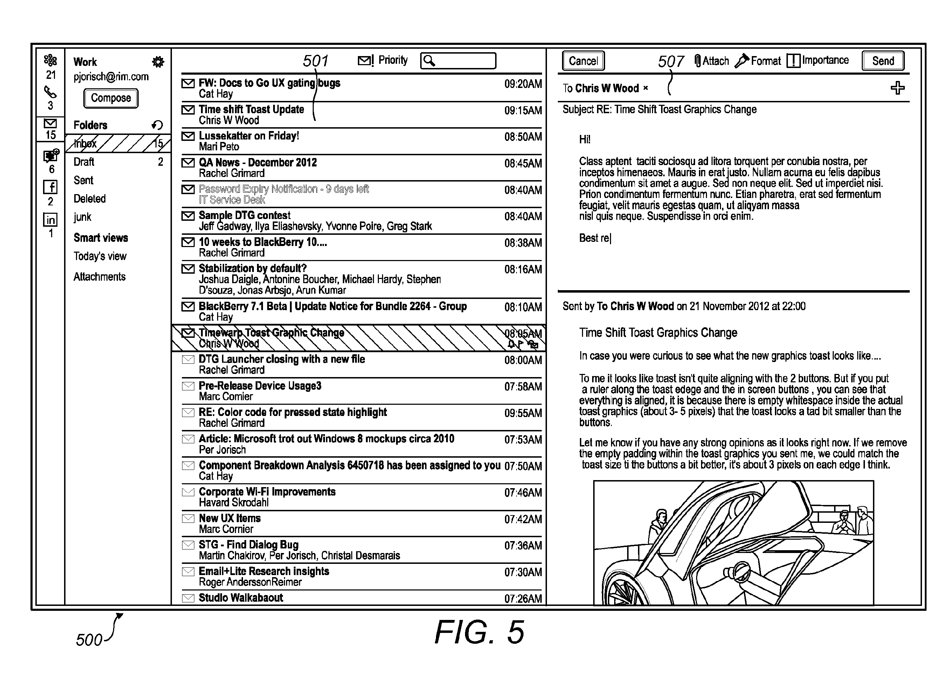

Turning now to Figure 5, there is shown an example user interface 500 of an email client (which may be a fat or thin client, or a webmail client served in a web browser) showing a graphical representation of a message-wise list view 501 of messages stored in an inbox 503 of a message repository. A user selection of a message 505 results in a view of the message being provided in a pane 507 of the user interface 500. The messages in the list 501 are grouped as conversations, and so the preview in pane 507 shows the messages in the conversation.

In message-wise views of the messages stored in a repository, such as that shown in Figure 5, it can often be difficult for users to locate files that are attached to those messages. To locate an attachment, a user will typically be required to peruse the list of message headers by scrolling, sorting or filtering, to identify a message which the user may know *a posteriori* to have the desired attachment. This in itself is cumbersome and can prove a difficult means to locate a file attachment. In particular, if the user cannot remember the sender of the attachment, or the name of the file, locating the attachment can be extremely difficult. Even where a searching facility is provided, this may not facilitate locating an attachment as the results are still displayed on a message-wise basis and the user may in any case not remember the name of the file or the sender, and may have difficulty in devising search terms capable of rendering straightforward the locating of the file.

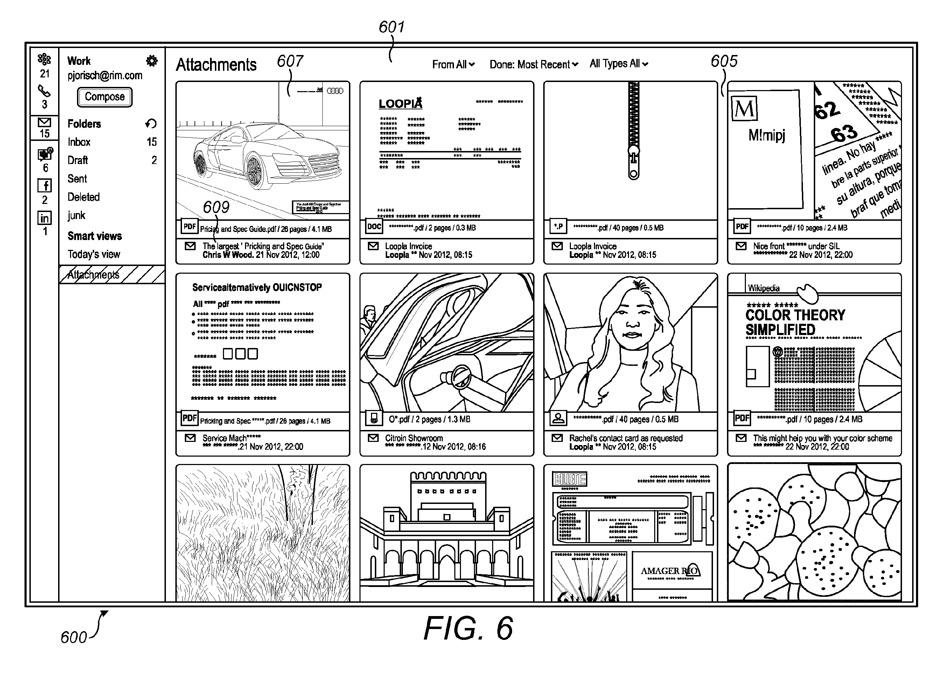

In one aspect the present disclosure describes a method in an electronic device including a processor. An exemplary graphical representation resulting from carrying out this method is shown in Figure 6. The method comprises: obtaining, in relation to a repository of computer-readable messages accessible by the computing apparatus, a graphical representation, for display using a display device, of a list of file attachments attached to said messages. The graphical representation is shown in the user interface 600 of the email client in Figure 6 as an "attachment view" 601, in which the attachments of messages stored in the repository are shown in a list 603 of the attachments. The attachment view may be triggered by the user selecting attachment view icon in the left hand pane of the user interface 600 of the email client. The listed file attachments are grouped by the messages to which they are respectively attached. In embodiments, each list entry may correspond to the attachments of one message. In embodiments, said list may display only attachments.

Providing a user with a graphical representation of a view of file attachments stored in a message repository grouped by message the user is facilitated in locating and accessing attachments. The attachment view provided by the method of this disclosure enables a user to peruse the attachments of messages stored in a repository in an attachment-wise list. This avoids the user having to peruse a list of messages to identify those having a file attachment, and to navigate to those messages to track down the right file attachment. Instead, a compelling and interactive view of attachments stored in a message repository is provided. Where the user in interested only in navigating through and interacting with message attachments, unnecessary and irrelevant data relating to messages (which may not even have attachments) is omitted from the attachment view, and the user is provided only with information that is of interest to him.

In addition, the attachment view groups the listed attachments by message. This avoids the view from becoming confusing (for example, where a message has a large number of attachments) while still linking the display of the attachments in the attachment view to the context of the messages in which they are stored. This can further facilitate perusal and navigation of the attachments contained in the repository.

As can be seen in the Figure 6 example attachment view, each entry in the list may occupy a set area of the display and the graphical representation may comprise thumbnail previews of said attachments. In this respect, each entry in the attachment view is presented to the user as an equally dimensioned 'tile' 605 showing a preview 607 of the attachment(s) for a single message. If a message has plural attachments, the set area for the list entry of said message (i.e. the 'tile') may be subdivided to provide previews of said attachments of said message. Providing a grid of previews of attachments grouped by message provides an elegant interactive view allowing quick identification of and navigation to file attachments.

A header 609 of the message to which said attachment is attached may be provided adjacent each list entry 605. The message header 609 may be selectable in response to user input to cause a representation of said message to be displayed on said display. Providing a hyperlinked message header adjacent each attachment or group thereof allows a user to see the context of the message with which the attachments are associated and to easily navigate to a view of the contents of the associated messages.

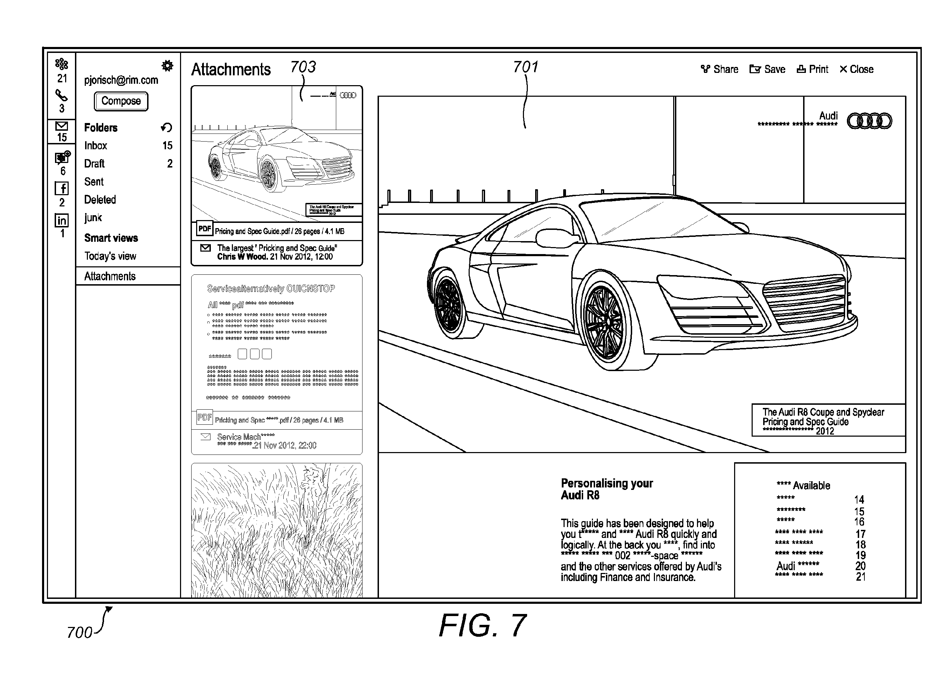

Selection of the tile 605 shown in Figure 6 thus leads to the graphical representation 700 shown in Figure 7, in which a larger view 701 of the attachment is displayed on said display. The list of attachments 703 (as shown in Figure 6) may continue to be displayed adjacent said larger view 701 of selected attachment. In other embodiments, said list of file attachments displayed adjacent a larger view of selected attachment may comprise only attachments attached to the same message.

As the method of the present disclosure can be implemented as a fat client, a thin client, or as webmail served through a web browser, the obtaining the graphical representation may comprise one or both of: locally generating at least part of the visual representation; receiving at least part of the visual representation from a remote location.

The present disclosure also provides an electronic device comprising: a processor; and memory comprising instructions which when executed by the electronic device to carry out the method of any of the embodiments set out above.

The present disclosure also provides computer-readable medium comprising instructions capable of causing an electronic device including a processor to carry out the method of any of the embodiments set out above.

## Claims

1. A method in an electronic device including a processor, comprising:
obtaining, in relation to a repository of computer-readable messages accessible by the computing apparatus, a graphical representation, for display using a display device, of a list of file attachments attached to said messages,
wherein the listed file attachments are grouped by the messages to which they are respectively attached.

2. A method as claimed in claim 1, wherein each list entry corresponds to the attachments of one message.

3. A method as claimed in claim 1 or 2, wherein each entry in the list occupies a set area of the display.

4. A method as claimed in claim 1, 2 or 3, wherein said representation comprises thumbnail previews of said attachments.

5. A method as claimed in claim 4, wherein, when said listed file attachments are grouped by message and each entry in the list occupies a set area of the display, if a message has plural attachments, the set area for the list entry of said message is subdivided to provide previews of said attachments of said message.

6. A method as claimed in claim 4 or 5, wherein said thumbnail previews are represented as tiles.

7. A method as claimed in any preceding claim, wherein said list displays only attachments.

8. A method as claimed in any preceding claim, wherein a header of the message to which said attachment is attached is provided adjacent each list entry.

9. A method as claimed in claim 8, wherein said message header is selectable in response to user input to cause a representation of said message to be displayed on said display.

10. A method as claimed in any preceding claim, wherein said list is arranged as a grid.

11. A method as claimed in any preceding claim, wherein each message is represented as one grid item.

12. A method as claimed in any preceding claim, wherein said list entry is selectable responsive to user input to cause a larger view of said attachment to be displayed on said display.

13. A method as claimed in claim 12, wherein said list of attachments is displayed adjacent said larger view of selected attachment.

14. A method as claimed in claim 13, wherein said list of file attachments displayed adjacent larger view of selected attachment comprises only attachments attached to the same message.

15. A method as claimed in any preceding claim, wherein obtaining the graphical representation comprises one or both of:
locally generating at least part of the visual representation;
receiving at least part of the visual representation from a remote location.

16. An electronic device comprising:
a processor; and
memory comprising instructions which when executed by the electronic device to carry out the method of any of claims 1 to 14.

17. Computer-readable medium comprising instructions capable of causing an electronic device including a processor to carry out the method of any of claims 1 to 14.
